# EUROPEAN PATENT APPLICATION

(11) **EP 3 364 539 A1**
(43) Date of publication of application: **22.08.2018**
(21) Application number: 16854925.1
(22) Date of filing: 11.10.2016
(51) Int. Cl.: H02S 40/30

(54) **ENERGY GATEWAY, HOUSEHOLD APPLIANCE, DIRECT-CURRENT MICRO-GRID SYSTEM AND ENERGY MANAGEMENT METHOD THEREFOR**

(30) Priority: 15.10.2015 CN 201510677211
(71) Applicant: Gree Electric Appliances, Inc. of Zhuhai, Qianshan Zhuhai Guangdong 519070 (CN)
(72) Inventor: TANG, Wenqiang, Zhuhai Guangdong 519070 (CN); NAN, Shugong, Zhuhai Guangdong 519070 (CN); REN, Peng, Zhuhai Guangdong 519070 (CN); HUANG, Meng, Zhuhai Guangdong 519070 (CN); LIU, Xia, Zhuhai Guangdong 519070 (CN); DONG, Mingzhu, Zhuhai Guangdong 519070 (CN); ZHAO, Zhigang, Zhuhai Guangdong 519070 (CN)
(74) Representative: Lavoix
(86) International application number: PCT/CN2016/101786
(87) International publication number: WO 2017/063547

(57) **Abstract**

An energy gateway, a household appliance, a direct-current micro-grid system and an energy management method therefor. The energy gateway comprises: a direct-current input end (1) for being connected to a direct-current output end of an external solar power generation apparatus (2). The energy gateway further comprises a first direct-current output end and/or a second direct-current output end for supplying power to an external direct-current electrical appliance (4), wherein the first direct-current output end is directly connected to the direct-current input end, and the second direct-current output end is connected to the direct-current input end via a direct-current voltage transformation apparatus (5). The energy gateway, the household appliance and the direct-current micro-grid system make a grid-connected inverter dispensable, reduce device investment and electric energy conversion links, and improve the utilization efficiency of new energy photovoltaic power generation. Furthermore, since the household appliance directly supplies power with a direct current, an internal rectification module can be removed, so as to reduce device investment and electric energy conversion loss, and eliminate multiple problems; for example, electric energy quality being influenced by harmonic pollution brought by the household appliance to a power grid.

## Description

### FIELD

The present application claims the priority to Chinese Patent Application No. 201510677211.3, titled "ENERGY GATEWAY, HOUSEHOLD APPLIANCE, DIRECT-CURRENT MICRO-GRID SYSTEM AND ENERGY MANAGEMENT METHOD THEREFOR", filed on October 15, 2015 with the Chinese State Intellectual Property Office, which is incorporated herein by reference in its entirety.

### BACKGROUND

With the increasing attention to environmental issues, new energy technologies such as photovoltaic power generation have been rapidly developed and widely used, and the use of the new energy sources is strongly encouraged in the relevant national policies. Distributed microgrid systems are widely used in the home power supplying due to an advantage in using new energy sources nearby. The direct current microgrid has many advantages such as a small number of energy conversions, high system efficiency and simple control, and facilitates the use of new energy sources in the home.

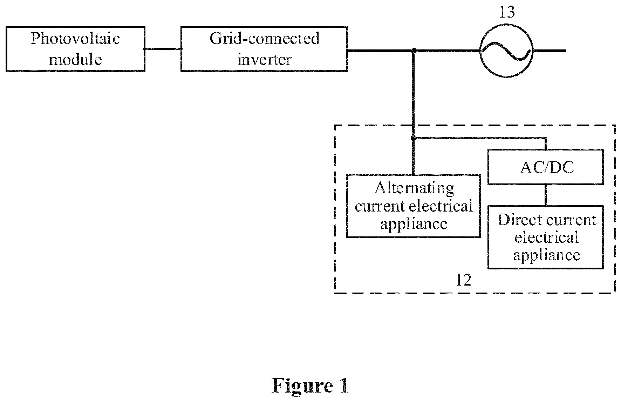

Currently, for the use of the new energy photovoltaic power generation in the home, a small photovoltaic power generation station is generally established to supply the generated power to a home power supplying system via a grid-connected inverter. A typical home microgrid system structure is shown in Figure 1. As shown in Figure 1, the home microgrid system in the conventional technology includes a grid-connected inverter, a photovoltaic module, and various loads (such as direct current electrical appliances and alternating current electrical appliances) in the home. The direct current electrical appliances and the alternating current electrical appliances constitute a household electricity consuming system 12. The photovoltaic module is connected with a mains supply grid 13 via the grid-connected inverter. According to the home microgrid system in the conventional technology, a small photovoltaic power generation system is connected to the home via the grid-connected inverter, and no improvement occurs in the entire home power supplying structure. In addition, rectification modules in most household electrical appliances are required to convert an alternating current to a direct current for use, which results in many problems such as great conversion loss, and reduced electrical energy quality due to harmonic pollution to the grid.

### SUMMARY

There are provided an energy gateway, a household electrical appliance, a direct current microgrid system and an energy management method according to embodiments of the present disclosure, to solve the problems in the conventional technology, such as a low utilization rate of solar power generation, great conversion loss of the household electrical appliance, and reduced electrical energy quality due to harmonic pollution to the grid.

In order to achieve the above object, an energy gateway is provided according to an embodiment of the present disclosure. The energy gateway includes a direct current input terminal. The direct current input terminal is connected to a direct current output terminal of an external solar power generation device. The energy gateway further includes a first direct current output terminal and/or a second direct current output terminal configured to supply power to an external direct current electrical appliance. The first direct current output terminal is directly connected to the direct current input terminal, and the second direct current output terminal is connected to the direct current input terminal via a direct current voltage transformation device.

Preferably, the energy gateway further includes a mains supply input terminal and a first DC/AC inverter. The mains supply input terminal is connected to the direct current input terminal via the first DC/AC inverter.

Preferably, the energy gateway further includes an alternating current output terminal and a second DC/AC inverter. The alternating current output terminal is configured to supply power to an external alternating current electrical appliance, and the direct current input terminal is connected to the alternating current output terminal via the second DC/AC inverter.

A household electrical appliance is further provided according to an embodiment of the present disclosure. The household electrical appliance includes the energy gateway described above.

Preferably, the household electrical appliance is a photovoltaic direct drive variable-frequency air conditioner.

A direct current microgrid system is further provided according to an embodiment of the present disclosure. The direct current microgrid system includes a solar power generation device, a load, and the energy gateway described above. The solar power generation device is connected to the load via the energy gateway.

A direct current microgrid system is further provided according to an embodiment of the present disclosure. The direct current microgrid system includes a solar power generation device, a load, and the household electrical appliance described above. The solar power generation device is connected to the load via the household electrical appliance.

An energy management method for a direct current microgrid system is further provided according to an embodiment of the present disclosure. The energy management method includes: inputting a direct current outputted by an external solar power generation device to a direct current bus; and connecting a direct current electrical appliance to the direct current bus directly in a case that a withstand voltage of the direct current electrical appliance is in a voltage range of the direct current bus, otherwise connecting the direct current electrical appliance to the direct current bus via a direct current voltage transformation device.

Preferably, the energy management method for the direct current microgrid system further includes: connecting an alternating current electrical appliance to the direct current bus via a first DC/AC inverter.

Preferably, the direct current bus, the direct current voltage transformation device and the first DC/AC inverter are integrated into a household electrical appliance serving as an energy gateway.

According to the present disclosure, a grid-connected inverter can be omitted, the device investment and the number of electrical energy conversions can be reduced, and the utilization efficiency of new energy photovoltaic power generation can be improved. Further, since the direct current is used to directly supply power to the household electrical appliance, the rectification module in the household electrical appliance can be removed, thereby reducing the device investment and the electrical energy conversion loss, and eliminating various problems, such as reduced electrical energy quality due to harmonic pollution to the grid caused by the household electrical appliance.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described hereinafter. It is apparent that, the drawings in the following description show only some embodiments of the present disclosure, and other drawings may be obtained by those skilled in the art from the drawings without creative efforts.
Figure 1 is a schematic structural diagram of a home microgrid system in the conventional technology;
Figure 2 is a schematic structural diagram of a direct current microgrid system in the present disclosure; and
Figure 3 is a flowchart of an energy management method for a direct current microgrid system in the present disclosure.

### Reference Numerals in the Figures:

| | | |
|---|---|---|
| 1 | direct current input terminal, | 2 solar power generation device, |
| 3 | direct current microgrid system, | 4 direct current electrical appliance, |
| 5 | direct current voltage transformation device, | |
| 6 | mains supply input terminal, | 7 first DC/AC inverter, |
| 8 | alternating current electrical appliance, | |
| 9 | alternating current output terminal, | 10 second DC/AC inverter, |
| 11 | photovoltaic direct drive variable-frequency air conditioner, | |
| 12 | household electricity consuming system, | |
| 13 | mains supply grid. | |

### DETAILED DESCRIPTION OF EMBODIMENTS

The present disclosure is further described in detail with reference to the drawings and the embodiments hereafter, and is not limited to the following description.

Currently, a direct current is used to supply power to most household electrical appliances (including variable-frequency electrical appliances). A rectification module in the household electrical appliance rectifies an alternating current to a direct current for use. In addition, a photovoltaic module generates a direct current. The direct current generated by the photovoltaic module in a typical home microgrid system is firstly converted to an alternating current and then applied to a home power supplying system, which results in great electrical energy loss and a low utilization rate due to the conversion. However, if the direct current generated by the photovoltaic module is directly applied to the household electrical appliance, the electrical energy conversion loss and the device investment can be reduced.

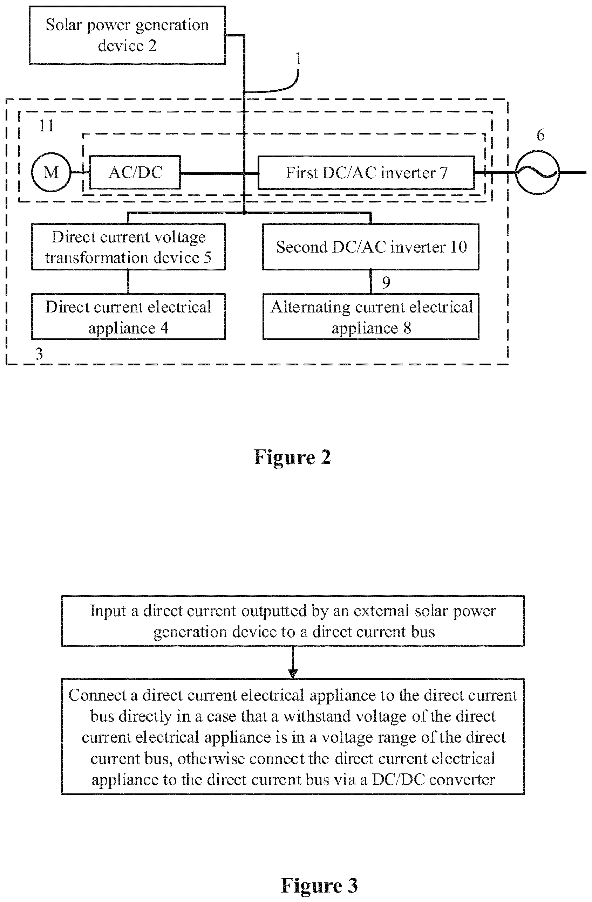

Referring to Figure 2, an energy gateway, in particular to a home energy gateway, is provided in the present disclosure. The energy gateway includes a direct current input terminal 1. The direct current input terminal 1 is connected to a direct current output terminal of an external solar power generation device 2. The energy gateway further includes a first direct current output terminal and/or a second direct current output terminal. The first direct current output terminal and/or the second direct current output terminal is configured to supply power to an external direct current electrical appliance 4. The first direct current output terminal is directly connected to the direct current input terminal 1. The second direct current output terminal is connected to the direct current input terminal 1 via a direct current voltage transformation device 5. For example, the solar power generation device 2 may be a photovoltaic module. Preferably, the direct current voltage transformation device 5 is a DC/DC converter.

According to the above technical solution in the present disclosure, the direct current generated by the solar power generation device 2 is directly supplied to a photovoltaic direct drive household electrical appliance. For example, in a case that a voltage at the first direct current output terminal is in a withstand voltage range of the direct current electrical appliance, the direct current electrical appliance is directly connected to the first direct current output terminal; otherwise the direct current electrical appliance is connected to the second direct current output terminal which is connected with the direct current voltage transformation device 5. Therefore, as compared with the home microgrid system in the conventional technology, a grid-connected inverter can be omitted in the present disclosure, thereby reducing the device investment and the number of electrical energy conversions, and improving the utilization efficiency of new energy photovoltaic power generation.

Further, since the direct current is used to directly supply power to the household electrical appliance, the rectification module in the household electrical appliance can be removed, thereby reducing the device investment and the electrical energy conversion loss, and eliminating various problems, such as reduced electrical energy quality due to harmonic pollution to the grid caused by the household electrical appliance.

Preferably, the energy gateway further includes a mains supply input terminal 6 and a first DC/AC inverter 7. The mains supply input terminal 6 is connected to the direct current input terminal 1 via the first DC/AC inverter 7. A household electrical appliance may serve as an energy gateway. In this case, the electrical energy generated by the solar power generation device 2 is preferentially supplied to the household electrical appliance. If the electrical energy generated by the solar power generation device 2 is not sufficient for the household electrical appliance, the needed electrical energy is supplemented by the grid mains supply. If the electrical energy generated by the solar power generation device 2 is surplus, the redundant electrical energy is provided to the grid to optimize the entire home power supplying system.

Preferably, the energy gateway further includes an alternating current output terminal 9 and a second DC/AC inverter 10. The alternating current output terminal 9 is configured to supply power to an external alternating current electrical appliance 8. The direct current input terminal 1 is connected to the alternating current output terminal 9 via the second DC/AC inverter 10.

Referring to Figure 2, a household electrical appliance is further provided in the present disclosure. The household electrical appliance includes the energy gateway described above. Preferably, the household electrical appliance is a photovoltaic direct drive variable-frequency air conditioner 11. A household electrical appliance, such as the photovoltaic direct drive variable-frequency air conditioner 11 may serve as an energy gateway. In this case, the electrical energy generated by the photovoltaic new energy device is preferentially supplied to the household electrical appliance. If the generated electrical energy is not sufficient for the household electrical appliance, the needed electrical energy is supplemented by the grid mains supply. If the generated electrical energy is surplus, the redundant electrical energy is provided to the grid.

A direct current microgrid system is further provided in the present disclosure. The direct current microgrid system includes a solar power generation device 2, a load, and the energy gateway described above. The solar power generation device 2 is connected to the load via the energy gateway.

With the above technology, the direct current microgrid system is compatible with household electrical appliances. A conventional alternating current household electrical appliance can be connected to the energy gateway via the second DC/AC inverter. In addition, for a direct current household electrical appliance, a connection relationship between the direct current household electrical appliance and the energy gateway can be determined based on a condition whether the withstand voltage of the direct current household electrical appliance is in a range of the direct current voltage outputted by the energy gateway. For example, in a case that the withstand voltage of the direct current electrical appliance is in a voltage range of the first direct current output terminal of the energy gateway, the direct current electrical appliance is directly connected to the first direct current output terminal. In a case that the withstand voltage of the direct current electrical appliance goes beyond a voltage range of the first direct current output terminal, the direct current electrical appliance is connected to the second direct current output terminal.

Referring to Figure 2, a direct current microgrid system is further provided in the present disclosure. The direct current microgrid system includes a solar power generation device 2, a load, and the household electrical appliance described above. The solar power generation device 2 is connected to the load via the household electrical appliance.

A household electrical appliance serves as an energy gateway to construct a home direct current microgrid system. In this case, photovoltaic power generation can be preferentially adopted to optimize the home power supplying structure, and the number of intermediate electrical energy conversions in the new energy power generation and use process can be reduced, thereby reducing the electrical energy loss during the power supplying. In addition, since the direct current is used to supply power to the household electrical appliance, the rectification module in the household electrical appliance can be omitted, thereby reducing the device investment and the electrical energy conversion loss, and eliminating various problems, such as reduced electrical energy quality due to harmonic pollution to the grid caused by the household electrical appliance.

In the direct current microgrid system in the present disclosure, a household electrical appliance, such as a photovoltaic direct drive variable-frequency air conditioner, serves as an energy gateway to ensure the energy balance of the home power supplying system, and the matched photovoltaic module may be directly connected to a direct current side of the photovoltaic direct drive variable-frequency air conditioner. The direct current side of the photovoltaic direct drive variable-frequency air conditioner is directly connected to a home direct current power distribution main line to form a direct current bus. In this case, other household electrical appliances in the home may be connected to the direct current bus, thereby forming a home direct current microgrid system to which power is supplied by a new energy source.

Referring to Figure 3, an energy management method for a direct current microgrid system is further provided in the present disclosure. The energy management method includes: inputting a direct current outputted by an external solar power generation device 2 to a direct current bus; and connecting a direct current electrical appliance to the direct current bus directly in a case that a withstand voltage of the direct current electrical appliance is in a voltage range of the direct current bus, otherwise connecting the direct current electrical appliance to the direct current bus via a direct current voltage transformation device 5.

Preferably, the energy management method for the direct current microgrid system further includes: connecting an alternating current electrical appliance to the direct current bus via a first DC/AC inverter 7.

Preferably, the direct current bus, the direct current voltage transformation device 5 and the first DC/AC inverter 7 are integrated into a household electrical appliance serving as an energy gateway.

The functions described in the method according to the present embodiment, in the case of being implemented in the form of software function units and being sold or used as independent products, may be stored in a readable storage medium of a computing device. Based on such understanding, the part of the embodiment of the present disclosure contributing to the conventional technology or the part of the technical solution may be embodied in the form of a software product. The software product is stored in a storage medium, and includes instructions which are executed to cause a computing device (which may be a personal computer, a server, a mobile computing device, a network device, or the like) to perform all or a part of the steps of the method described in the embodiments of the present disclosure. The storage medium may include: a U disk, a removable hard disk, a read-only memory (ROM), a random access memory (RAM), a magnetic disk, an optical disk, or any other medium that can store program codes.

Embodiments in this specification are described in a progressive manner, each of the embodiments emphasizes differences between the embodiment and other embodiments, and the same or similar parts among the embodiments can be referred to each other.

Based on the above description of the disclosed embodiments, those skilled in the art can carry out or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the broadest scope consistent with the principle and novel features disclosed herein.

## Claims

1. An energy gateway, comprising:
a direct current input terminal (1) connected to a direct current output terminal of an external solar power generation device (2); and
a first direct current output terminal and/or a second direct current output terminal configured to supply power to an external direct current electrical appliance (4), wherein the first direct current output terminal is directly connected to the direct current input terminal (1), and the second direct current output terminal is connected to the direct current input terminal (1) via a direct current voltage transformation device (5).

2. The energy gateway according to claim 1, further comprising:
a mains supply input terminal (6); and
a first DC/AC inverter (7), wherein
the mains supply input terminal (6) is connected to the direct current input terminal (1) via the first DC/AC inverter (7).

3. The energy gateway according to claim 1, further comprising:
an alternating current output terminal (9) configured to supply power to an external alternating current electrical appliance (8); and
a second DC/AC inverter (10), wherein
the direct current input terminal (1) is connected to the alternating current output terminal (9) via the second DC/AC inverter (10).

4. A household electrical appliance, comprising the energy gateway according to any one of claims 1 to 3.

5. The household electrical appliance according to claim 4, wherein the household electrical appliance is a photovoltaic direct drive variable-frequency air conditioner.

6. A direct current microgrid system, comprising:
a solar power generation device (2);
a load; and
the energy gateway according to any one of claims 1 to 3, wherein
the solar power generation device (2) is connected to the load via the energy gateway.

7. A direct current microgrid system, comprising:
a solar power generation device (2);
a load; and
the household electrical appliance according to claim 4 or 5, wherein
the solar power generation device (2) is connected to the load via the household electrical appliance.

8. An energy management method for a direct current microgrid system, comprising:
inputting a direct current outputted by an external solar power generation device (2) to a direct current bus; and
connecting a direct current electrical appliance to the direct current bus directly in a case that a withstand voltage of the direct current electrical appliance is in a voltage range of the direct current bus, otherwise connecting the direct current electrical appliance to the direct current bus via a direct current voltage transformation device (5).

9. The energy management method for the direct current microgrid system according to claim 8, further comprising:
connecting an alternating current electrical appliance to the direct current bus via a first DC/AC inverter (7).

10. The energy management method for the direct current microgrid system according to claim 9, wherein the direct current bus, the direct current voltage transformation device (5) and the first DC/AC inverter (7) are integrated into a household electrical appliance serving as an energy gateway.
